**Europäisches Patentamt**

**European Patent Office**

**Office européen des brevets**

(11) Veröffentlichungsnummer: **0 475 157 A2**

# (12) EUROPÄISCHE PATENTANMELDUNG

(21) Anmeldenummer: **91114151.3**

(22) Anmeldetag: **23.08.91**

(51) Int. Cl.5: **C08L 71/12**, C08L 51/04, C08L 25/08

(30) Priorität: **14.09.90 DE 4029190**

(43) Veröffentlichungstag der Anmeldung:
**18.03.92 Patentblatt 92/12**

(84) Benannte Vertragsstaaten:
**BE DE ES FR GB NL**

(71) Anmelder: **BASF Aktiengesellschaft**
**Carl-Bosch-Strasse 38**
**W-6700 Ludwigshafen(DE)**

(72) Erfinder: **Zeltner, Doris, Dr.**
**Viehtriftstrasse 94**
**W-6725 Roemerberg, Heiligenstein(DE)**
Erfinder: **Seitz, Friedrich, Dr.**
**Von-Wieser-Strasse 1**
**W-6701 Friedelsheim(DE)**
Erfinder: **Muehlbach, Klaus, Dr.**
**Dr.-Heinrich-Winter-Strasse 19**
**W-6148 Heppenheim(DE)**
Erfinder: **Feldmann, Heike, Dr.**
**B 4,2**
**W-6800 Mannnheim 1(DE)**

(54) **Hochschlagfeste thermoplastische Formmassen.**

(57) Formmasse, enthaltend - bezogen auf die Summe aus A, B, C und D -
A: mindestens 5 Gew.-% eines Polyphenylenethers A
B: mindestens 5 Gew.-% eines schlagzäh modifizierten Polystyrols B
C: 1 bis 20 Gew.-% eines Blockcopolymerisats C aus Styrol und konjugiertem Dien
D: sowie 1 bis 20 Gew.-% eines durch Pfropfung von Styrol auf einen EPDM-Kautschuk erhaltenen Copolymerisats D.

**EP 0 475 157 A2**

Die Erfindung betrifft thermoplastische Formmassen aus Polyphenylenether, schlagzäh modifiziertem Polystyrol, einem Blockcopolymeren aus Styrol und einem Dien. Solche Formmassen sind z.B. in den nachstehenden Druckschriften (1) bis (7) beschrieben.

(1) DE 20 00 118

(2) DE 22 55 930

(3) DE 27 50 514

(4) J5 9140-257

(5) EP 52 854

(6) EP 83 049

(7) DE 25 06 094

Polymermischungen, die Polyphenylenether und Blockkautschuke aus vinylaromatischen Verbindungen und Dienen enthalten, sind z.B. aus der (1) DE 20 00 118 und (2) 22 55 930 bekannt. Nachteil der Formmassen ist eine ungenügende thermische Beständigkeit. Weiterhin weisen Fertigteile, die höhere Anteile an hydriertem Blockkautschuk enthalten, Delaminierungserscheinungen auf, d.h. bei langen Fließwegen treten inhomogene Schichtstrukturen auf.

In (3) ist eine hochschlagfeste thermoplastische Zusammensetzung beschrieben, die neben Polyphenylenether und schlagfestem Polystyrol eine Mischung aus einem olefinischen Harz (z.B. EP) und einem linearen oder radialen Blockcopolymerisat aus einer vinylaromatischen Verbindung und einem Dien enthält. Die Formmassen weisen jedoch den Nachteil auf, daß die multiaxiale Zähigkeit noch verbesserungsbedürftig ist.

In (4) ist eine schlagfeste Polyphenylenetherharz-Zusammensetzung beschrieben, die neben Polyphenylenether und schlagfestem Polystyrol ein Zweiblockcopolymeres aus einer monovinylaromatischen Verbindung und einem olefinischen Block, sowie ein mit Styrol gepfropftes Ethylen-Propylen-Copolymeresenthält. Nachteil dieser Formmassen sind ebenfalls bei der Verarbeitung auftretende Delaminierungserscheinungen.

In (5), (6) und (7) werden Mischungen aus Polyphenylenether und schlagfestem Polystyrol beschrieben, die als wesentliche Komponente einen mit Styrol gepfropften EPDM-Kautschuk enthalten. Auch bei diesen Formmassen werden bei hohen Anteilen an EPDM-Kautschuk am Fertigteil Delaminierungserscheinungen beobachtet. Weiterhin ist die multiaxiale Zähigkeit ungenügend.

Es wurde nun gefunden, daß Formmassen, auf der Grundlage von Mischungen (Blends) aus Polyphenylenether (PPE) und schlagzähem Polystyrol (HIPS), die als Zusatz ein Blockcopolymeres aus Styrol und einem Dien, sowie ein mit Styrol modifiziertes Ethylen-$\alpha$-Olefin-Polyenterpolymeres enthalten, ein hervorragendes Eigenschaftsniveau aufweisen. Hervorzuheben ist die Schlagzähigkeit, sowie die multiaxiale Zähigkeit bei tiefen Temperaturen, weiterhin die exzellente Witterungsbeständigkeit und Thermooxidationsbeständigkeit in Kombination mit guter Wärmeformbeständigkeit und guter Fließfähigkeit. Die Formmassen lassen sich zu Probekörpern verarbeiten, die keine Delaminierungserscheinungen aufweisen.

Unmittelbarer Erfindungsgegenstand ist eine Formmasse, enthaltend - bezogen auf die Summe aus A, B, C und D -

A: mindestens 5, vorzugsweise 20 bis 80 Gew.-% eines Polyphenylenethers A

B: mindestens 5, vorzugsweise 20 bis 80 Gew.-% eines schlagzäh modifizierten Polystyrols B

C: 1 bis 20, vorzugsweise 3 bis 15 Gew.-% eines Blockcopolymerisats C aus Styrol und konjugiertem Dien, sowie

D: 1 bis 20, vorzugsweise 3 bis 15 Gew.-% eines durch Pfropfung von Styrol auf einen EPDM-Kautschuk erhaltenen Copolymerisats D.

Zu den erfindungsgemäßen Bestandteilen der Formmasse ist im einzelnen das Folgende zu sagen:

Komponente A:

Die in Frage kommenden Polyphenylenether A sind an sich bekannt und werden vorzugsweise durch oxidative Kupplung von in o-Position disubstituierten Phenolen hergestellt.

Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl- oder Butylreste zu nennen. Die Alkylreste können wiederum durch Halogenatome wie Chlor oder Brom oder durch eine Hydroxylgruppe substituiert sein. Weitere Beispiele möglicher Substituenten sind Alkoxireste, vorzugsweise mit bis zu 4 Kohlenstoffatomen oder gegebenenfalls durch Halogenatome und/oder Alkylgruppen substituierte Phenylreste. Ebenfalls geeignet sind Copolymere verschiedener Phenole wie z.B. Copolymere von 2,6-Dimethylphenol und 2,3,6-Trimethylphenol. Selbstverständlich können auch Gemische verschiedener Polyphenylenether eingesetzt werden.

Vorzugsweise werden solche Polyphenylenether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und O. Olabisi, Polymer-Polymer Miscibility, 1979, S. 117-189).

Beispiele für Polyphenylenether sind

Poly(2,6-dilauryl-1,4-phenylen)ether,
Poly(2,6-diphenyl-1,4-phenylen)ether,
Poly(2,6-dimethoxy-1,4-phenylen)ether,
Poly(2,6-diethoxi-1,4-phenylen)ether,
Poly(2-methoxi-6-ethoxi-1,4-phenylen)ether,
Poly(2-ethyl-6-stearyloxi-1,4-phenylen)ether,
Poly(2,6-dichlor-1,4-phenylen)ether,
Poly(2-methyl-6-phenylen-1,4-phenylen)ether,
Poly(2,6-dibenzyl-1,4-phenylen)ether,
Poly(2-ethoxi-1,4-phenylen)ether,
Poly(2-chlor-1,4-phenylen)ether,
Poly(2,5-dibrom-1,4-phenylen)ether.

Bevorzugt werden Polyphenylenether eingesetzt, bei denen die Substituenten Alkylreste mit 1 bis 4 Kohlenstoffatomen sind, wie
Poly(2,6-dimethyl-1,4-phenylen)ether,
Poly(2,6-diethyl-1,4-phenylen)ether,
Poly(2-methyl-6-ethyl-1,4-phenylen)ether,
Poly(2-methyl-6-propyl-1,4-phenylen)ether,
Poly(2,6-dipropyl-1,4-phenylen)ether und
Poly(2-ethyl-6-propyl-1,4-phenylen)ether.

Weiterhin sind Pfropfcopolymere aus Polyphenylenether und vinylaromatischen Polymeren wie Styrol, $\alpha$-Methylstyrol, Vinyltoluol und Chlorstyrol geeignet.

Geeignete Polyphenylenether weisen im allgemeinen eine intrinsische Viskosität $\eta_{sp}/c$ von 0,2-0,7 dl/g auf, gemessen in Chloroform bei 25°C. Dies entspricht in etwa einem Molekulargewichtsbereich von 10 000-60 000.

Für die erfindungsgemäßen Formmassen ist Poly(2,6-dimethyl-1,4-phenylen)ether bevorzugt.


Komponente B:

Als Komponente B zum Aufbau der erfindungsgemäßen Formmasse dient schlagzähes Polystyrolharz. Darunter ist zweiphasig aus einer Hartmatrix und einer Weichphase aufgebautes schlagzähes Polystyrol zu verstehen, das allgemein bekannt ist.

Die Hartmatrix der Komponente B besteht aus einem Styrol-Polymeren. Diese Hartmatrix macht, bezogen auf die Komponente A, 60 bis 95 Gew.-%, vorzugsweise 80 bis 95 Gew.-% aus. Als Monomeres zum Aufbau der Hartmatrix kommt insbesondere Styrol in Frage. Es können jedoch auch $\alpha$-Methylstyrol oder p-Methylstyrol oder Mischungen substituierter Styrole verwendet werden, bevorzugt ist jedoch die ausschließliche Verwendung von Styrol, so daß die Hartmatrix bevorzugt aus Polystyrol besteht.

Die Hartmatrix entsteht in bekannter Weise bei der Herstellung der Komponente B dadurch, daß eine Weichphase, d.h. ein Kautschuk mit dem die Hartmatrix später aufbauenden Styrol-Monomeren thermisch oder radikalisch polymerisiert wird. Dabei bilden sich Pfropfmischpolymerisate des Kautschuks (Weichphase) und ungepfropfte Styrol-Polymere, die Hartmatrix.

Bei der Weichphase handelt es sich somit um ein Pfropfmischpolymerisat aus dem(n) Monomeren der Hartmatrix, d.h. insbesondere von Styrol, auf den Kautschuk oder auf ein Gemisch von Kautschuken.

Die Hartmatrix kann eine Viskositätszahl $\eta_{sp}/c$ im Bereich von 50 bis 140, insbesondere im Bereich von 70 bis 120, aufweisen. Dies entspricht mittleren Molgewichten ($M_w$) im Bereich von 100.000 bis 350.000, insbesondere 150.000 bis 300.000.

Die Weichphase liegt im Endergebnis fein dispergiert in der Hartmatrix vor. Die Art und Weise, wie eine Weichphase in einer Hartmatrix dispergiert sein kann, ist bekannt. Die Weichphase kann 3 bis 40 Gew.-%, vorzugsweise von 5 bis 20 Gew.-% der Hartmatrix ausmachen. Sie weist eine mittlere Teilchengröße im Bereich von 0,01 bis 10 $\mu$m, vorzugsweise im Bereich von 0,3 bis 8 $\mu$m auf. Bei dem genannten Teilchengrößenbereich handelt es sich um die mittlere Teilchengröße, bestimmt durch Auszählen einer elektronenmikroskopischen Aufnahme, also ein Zahlenmittel. Wenn die mittlere Teilchengröße der Weichkomponente als Gewichtsmittel bestimmt wird, sollte sie im Bereich von 0,2 bis 6 $\mu$m liegen. Unter mittlerer Teilchengröße ist dabei das Gewichtsmittel zu verstehen, wie es in der DE-A-30 35 648 beschrieben ist.

Besonders geeignet sind schlagzäh modifizierte Polymerisate, in denen die gewichtsgemittelte Teilchengröße im Bereich von 0,6 bis 4 $\mu$m liegt. Die Teilchen können sogenannte Zell- oder Kapselteilchen sein. Solche Teilchen sind z.B. in A. Echte, "Styrolpolymere", Winnacker-Küchler, Chemische Technologie, Band 6, Organische Technologie II, Carl-Hanser-Verlag, München-Wien 1982, S. 373-390 näher beschrieben.

Als Weichphase ist Polybutadien und dessen Pfropfmischpolymerisat mit Styrol bevorzugt. Besonders geeignet sind Polybutadiene vom medium- oder high-cis-Typ mit Molekulargewichten im Bereich von 70.000 bis 450.000 (Gewichtsmittel). Vorzugsweise werden medium-cis-Polybutadiene mit Molgewichten von 300.000 bis 400.000 eingesetzt.

Die schlagzähen Styrol-Polymerisate werden nach bekannten Verfahren in Masse, Lösung oder Suspension hergestellt (vgl. Ullmanns Encyclopädie der Technischen Chemie, Band 19, Seiten 265-272, Verlag Chemie, Weinheim 1980). Als Comonomere zur Herstellung von Copolymerisaten kommen z.B. (Meth)acrylsäure, (Meth)acrylsäureester mit 1 bis 4 C-Atomen im Alkylrest, Acrylnitril und Maleinsäureanhydrid sowie Maleinsäureimide in Betracht. Die Comonomeren sind je nach ihrer Struktur in unterschiedlichen Mengen in den Styrolpolymerisaten enthalten. Entscheidend für den Gehalt an Comonomeren im Mischpolymerisat ist die Mischbarkeit des Copolymerisats mit dem Polyphenylenether. Solche Mischungsgrenzen sind bekannt und beispielsweise in den US-Patentschriften 4 360 618 und 4 405 753 und in der Veröffentlichung von J.R. Fried, G.A. Hann, Polymer Eng. Sci., Band 22 (1982), Seite 705 ff, beschrieben. Die Herstellung der Copolymeren erfolgt z.B. nach den Angaben in Ullmanns Encyklopädie der techn. Chemie, Band 19, Seite 273 ff, Verlag Chemie, Weinheim (1980). Die Copolymerisate haben im allgemeinen Gewichtsmittel des Molekulargewichts ($M_w$) von 10000 bis 300 000, die mit üblichen Methoden bestimmt werden können.

Die meist angewandten Verfahren zur Herstellung schlagzähmodifizierter Styrolpolymerisate sind die Polymerisation in Masse oder Lösung in Gegenwart eines Kautschuks, wie es beispielsweise in der US-Patentschrift 2 694 692 beschrieben ist, und Verfahren zur Massesuspensionspolymerisation, wie sie beispielsweise in der US-Patentschrift 2 862 906 beschrieben sind.

Als Kautschuke werden die üblicherweise für die Schlagzähmodifizierung von Styrolpolymerisaten gebräuchlichen natürlichen oder synthetischen Kautschuke eingesetzt. Geeignete Kautschuke im Sinne der Erfindung sind neben Naturkautschuk z.B. Polybutadien, Polyisopren und Mischpolymerisate des Butadiens und/oder Isoprens mit Styrol und anderen Comonomeren, die eine Glastemperatur, bestimmt nach K.H. Illers und H. Breuer, Kolloidzeitschrift 190 (1), 16-34 (1963), unter -20°C besitzen. Es können aber auch Acrylatkautschuke, EPDM-, Polybutylen- und Polyoctenamerkautschuke eingesetzt werden.

Komponente C

Bei den erfindungsgemäß verwendeten Blockcopolymerisaten handelt es sich um elastomere Copolymere des Typs AB, ABA' oder $(A/B)_n$-X. Hierin steht A und A' für einen nicht elastomeren Polystyrolblock, B für einen elastomeren hydrierten und/oder nichthydrierten Block eines konjugierten Diens, n ggf. für eine ganze Zahl von mindestens 3 und X für den Rest eines multifunktionellen Kupplungsmittels, über den die Verzweigungen (A-B) des Blockcopolymerisates chemisch miteinander verbunden sind.

Diese Verbindungen sind an sich bekannt aus der EP-A-95 098.

Anstelle von Styrol können die seitenkettenalkylierten Styrole, wie $\alpha$-Methylstyrol und die kernsubstituierten Styrole, wie Vinyltoluol, Ethylvinylbenzol und andere verwendet werden. Vorzugsweise wird Styrol allein verwendet.

Konjugierte Diene, die für die erfindungsgemäßen Polymerisate insbesondere in Betracht kommen, sind beispielsweise 1,3-Butadien sowie Isopren. Diese Diene werden entweder allein oder in Mischung miteinander für die Herstellung der Blockcopolymerisate herangezogen.

Bevorzugt ist ein nicht hydriertes Blockcopolymeres, besonders bevorzugt ein nicht hydriertes ABA'-Dreiblockcopolymeres, wobei das Molekulargewicht der Endblöcke im Bereich von etwa 2000 bis 100 000 liegt, während das Molekulargewicht des Zentralblocks im Bereich von etwa 25 000 bis etwa 100 000 liegt und das Molekulargewicht des Zentralblocks größer ist als das der kombinierten Endblöcke.

Die Blockcopolymeren werden z.B. durch ein metallorganisch initiiertes Polymerisationsverfahren unter Verwendung von Natrium- oder Lithiummetall oder einem organischen Derivat dieser Alkalimetalle hergestellt. Die Dienmonomere können mit einem monofunktionellen oder difunktionellen Initiator polymerisiert werden.

Die Blockcopolymeren sind in der erfindungsgemäßen Formmasse in einem Gewichtsanteil von 1 bis 20 %, bevorzugt 3 bis 15 % vorhanden.

Komponente D

Bei dieser Komponente handelt es sich um ein mit Styrol gepfropftes Ethylen/α−Olefin/Polyen-Terpolymer. Bevorzugte α-Olefine enthalten 3 bis 10 Kohlenstoffatome, z.B. Propylen, 1-Buten, 1-Penten, 1-Hexen, und 1-Hepten. Bevorzugt ist Propylen. Als Polyene werden bevorzugt cyclische oder offenkettige nicht konjugierte Verbindungen eingesetzt. Beispiele sind 1,4-Hexadien, 1,6-Octadien, 2-Methyl-1,5-hexadien, 6-Methyl-1,5-heptadien, 7-Methyl-1,6-octadien, 11-Ethyl-1,11-tridecadien, 9-Ethyl-1,9-undecadien, Isopren, 1,4-Pentadien, 1,3-Pentadien, 1,4,9-Decatrien, 1-Phenyl-1,3-butadien, p-Diallylbenzol, 4-Vinyl-1-cyclohexen, 1,3,5-Trivinylcyclohexan, trans-1,2-Divinylcyclohexan, 1,5-Cyclooctadien, 1,3,5-Cycloheptatrien, 1,5,9-Cyclododecatrien, 1,4-Cycloheptadien, Cyclopentadien, 2,2'-Dicyclopentenyl-1,4-bis(cyclopenten-2-yl)-butan, 4,7,8,9-Tetrahydroinden, Bicyclo(3,3,0)-Octadien-2,6-dicyclopentadien, 2-Methyl-2,5-norbornadien, 5-Methylen-2-norbornen, 5-Ethyliden-2-norbornen, 5-Isopropyliden-2-norbornen, 5-Isopropenyl-2-norbornen, 5-(2'-Methyl-1'-propenyl)-2-norbornen, 5-(1',2'-Dimethyl-1'-propenyl)-2-norbornen, 5-(2'-Butenyl)-2-norbornen, 6-Methyl-5-(2'-butenyl)-2-norbornen, 6-(3'-Cyclohexenyl)-2-norbornen, Tricyclopentadien und 6-Chloromethyl-5-isopropenyl-2-norbornen.

Die Pfropfgrundlage setzt sich aus mindestens 10 Gew.-% Ethylen, etwa 10 bis 90 Gew.-% α-Olefin und 0,1 bis 30 Gew.-% Polyen zusammen. Bevorzugt sind mindestens 40 Gew.-% Ethylen, 10 bis 60 Gew.-% α-Olefin und 0,3 bis 10 Gew.-% Polyen. Besonders bevorzugt sind 50 bis 85 Gew.-% Ethylen, 15 bis 50 Gew.-% α-Olefin und 1 bis 7 Gew.-% Polyen.

Als Pfropfungsmittel kommen alle vorstehend aufgeführten Styrole in Betracht. Bevorzugt ist gewöhnliches Styrol.

Zur Pfropfung des EPDM-Kautschuks kommen übliche Polymerisationsmethoden, wie Suspensionspolymerisation, Emulsionspolymerisation, Lösungspolymerisation und Massepolymerisation in Betracht. Bevorzugt ist die Emulsionspolymerisation. Der Styrolgehalt im Endprodukt beträgt z.B. 5 bis 70 Gew.-%, vorzugsweise 5 bis 50 Gew.-%, besonders bevorzugt 5 bis 30 Gew.-%.

Beispiele für die Herstellung von Komponente D finden sich z.B. in EP-A 83 049 und 52 854.

Die Komponente D ist in der erfindungsgemäßen Formmasse zu 1 bis 20 Gew.-%, bevorzugt 3 bis 15 Gew.-% enthalten.

Komponente E

Weitere Zusatzstoffe, die in der erfindungsgemäßen Formmasse enthalten sein können, sind übliche, i.a. mineralische Verstärkungsmaterialien, wie Glaskugeln, Mineralfasern, Whisker, Glimmer oder insbesondere Glasfasern in Mengen von z.B. bis zu 30 Gew.-%, bezogen auf 100 Gew.-% der Summe der Bestandteile der Formmasse.

Zusätzlich können noch weitere Zusatzstoffe, wie Flammschutzmittel, Hitze- und Lichtstabilisatoren, Gleit- und Entformungsmittel, Färbemittel, wie Farbstoffe und Pigmente in üblichen Mengen enthalten sein. Als Flammschutzmittel werden bevorzugt phosphorhaltige Verbindungen, wie Phosphinoxide oder Phosphate eingesetzt.

Herstellung der Formmassen

Die Herstellung der erfindungsgemäßen thermoplastischen Formmassen erfolgt zweckmäßigerweise durch Mischen der Komponenten im Temperaturbereich von 200 bis 350°C, vorzugsweise 250 bis 300°C in üblichen Mischvorrichtungen, wie z.B. Knetern, Banbury-Mischern und Einschneckenextrudern, vorzugsweise in einem Zweischneckenextruder. Um eine möglichst homogene Formmasse zu erhalten, ist eine intensive Durchmischung notwendig. Die Verweilzeit liegt im allgemeinen im Bereich von 0,5 bis 30 min., vorzugsweise von 1 bis 5 min. Die Reihenfolge des Mischens der Komponenten kann varriert werden, es können ausgewählte Komponenten vorgemischt sein oder es können auch alle Komponenten gemeinsam gemischt werden.

Die erfindungsgemäßen Formmassen eignen sich gut zur Herstellung von Formteilen aller Art, z.B. durch Spritzguß oder Extrudieren. Sie können weiterhin dienen zur Herstellung von Folien und Halbzeug im Tiefzieh- oder Blasverfahren.

Die erfindungsgemäßen Formmassen besitzen vor allem sehr gute Zähigkeit kombiniert mit hoher Wärmeformbeständigkeit und guter Fließfähigkeit. Hervorzuheben ist die gute Witterungs- und Thermooxidationsbeständigkeit und das gute Erscheinungsbild der aus den Formmassen hergestellten Formkörpern, die keine Delaminierungserscheinungen zeigen.

Zur Erläuterung der Vorteile der Formmassen werden nachstehende Eigenschaften ermittelt:
Der Melt-Flow-Index (MFI) bei 250°C und 21,6 kg nach DIN 53735. Die Vicat-Temperatur VST/B nach DIN 53460. Die Kerbschlagzähigkeit $a_k$ nach DIN 53453. Die Durchstoßarbeit DSTA nach DIN 53443 bei 20°C und -40°C.

Zur Beurteilung der Thermooxidationsbeständigkeit wurde der Durchstoßtest herangezogen. Dazu wurde die Durchstoßarbeit an Probekörpern bestimmt, die 7 bzw. 14 Tage bei 110°C gelagert worden waren. Die Probekörper sind zu diesem Zweck in einem Umluft-Trockenschrank mit der Bezeichnung UT 6200 der Fa. Heraeus gelagert worden.

Die Neigung zur Delaminierung wurde anhand des Bruchbildes von Rundscheiben beim Durchstoßtest, sowie an Formteilen untersucht, wobei die Schichtenbildung anhand eines Rautenschnitts überprüft wurde.

Die Probekörper wurden bei 280°C spritzgegossen.

Für Beispiele und Vergleichbeispiele wurden die folgenden Komponenten eingesetzt:

Komponente A:

A(1): Poly-(2,6-dimethyl-1,4-phenylen)ether mit einer Grenzviskosität von 0,50 dl/g gemessen in Chloroform

Komponente B:

B(1): Schlagfestes Polystyrol 586 der BASF AG mit einem Gehalt von 10 Gew-% Butadien.

Komponente C:

C(1): SBS-Dreiblockkautschuk Cariflex TR 1101 der Shell AG.

Komponente D:

D(1):  40 g eines EPDM-Polymeren (Vistalon 7000 von EXXON) wurden zusammen mit 200 ccm Wasser in einen 500 ccm Glasautoklaven vorgelegt. Dazu wurde unter Rühren nacheinander eine Lösung von 0,2 g Benzoylperoxid in 40 g Styrol und eine Lösung von 1,2 g Polyvinylalkohol in 40 g Wasser gegeben. Die Mischung wurde zuerst für eine Stunde gerührt, dann 6 Stunden bei 90°C und abschließend 2 Stunden bei 115°C sich selber überlassen. Das Produkt wurde durch Filtration gewonnen und im Vakuum getrocknet (zur Herstellung erfindungsgemäßer Formmassen).

D(2):  mit Styrol modifiziertes EPDM-Polymeres analog Beispiel 8 der EP 52 854 (zur Herstellung erfindungsgemäßer Formmassen).

D(3):  Vistalon 7000 von Exxon (zum Vergleich).

Die Beispiele und der Vergleich sind in Tabelle 1, die Eigenschaften der entsprechenden Formmassen in Tabelle 2 aufgelistet.

Tabelle 1 - Zusammensetzung der Formmassen

| Beispiele und Vergleiche | Komponente A [Gew.-%] | Komponente B [Gew.-%] | Komponente C [Gew.-%] | Komponente D [Gew.-%] |
|---|---|---|---|---|
| 1 | A(1) 35 | B(1) 57 | C(1) 4 | D(2) 4 |
| 2 | A(1) 40 | B(1) 50 | C(1) 4 | D(1) 6 |
| 3 | A(1) 55 | B(1) 33 | C(1) 8 | D(2) 4 |
| V1 | A(1) 40 | B(1) 50 | C(1) 4 | D(3) 6 |
| V2 | A(1) 40 | B(1) 50 | – | D(3) 10 |
| V3 | A(1) 40 | B(1) 50 | – | D(1) 10 |
| V4 | A(1) 55 | B(1) 33 | – | D(2) 12 |

EP 0 475 157 A2

Tabelle 2 - Eigenschaften der Formmassen

| Beispiele und Vergleiche | MFI [ml/0°] | Vicat [°C] | ak [kJ/m²] | DSTA [Nm] | | | | Delaminierung am Fertigteil* |
|---|---|---|---|---|---|---|---|---|
| | | | | 20°C | -40°C | 20°C, 7d bei 110°C | 20°C, 14d bei 110°C | |
| 1 | 49 | 126 | 18,0 | 54 | 25 | 35 | 25 | - |
| 2 | 40 | 135 | 21,3 | 56 | 31 | 38 | 29 | - |
| 3 | 21 | 149 | 23,4 | 49 | 30 | 37 | 33 | - |
| V1 | 38 | 139 | 20,1 | 30 | 8 | 19 | 7 | 0 |
| V2 | 35 | 141 | 18,2 | 19 | 2 | 7 | 3 | ++ |
| V3 | 40 | 133 | 19,5 | 45 | 22 | 31 | 20 | + |
| V4 | 20 | 146 | 21,7 | 45 | 25 | 34 | 28 | + |

Fußnote:

\* - bedeutet ohne Befund; 0, + und ++ bedeutet leichte, mittlere bzw. erhebliche Delaminierungserscheinungen
   - subjektive, visuelle Beurteilung

**Patentansprüche**

1. Formmasse, enthaltend - bezogen auf die Summe aus A, B, C und D -
   A: mindestens 5 Gew.-% eines Polyphenylenethers A

B: mindestens 5 Gew.-% eines schlagzäh modifizierten Polystyrols B

C: 1 bis 20 Gew.-% eines Blockcopolymerisats C aus Styrol und konjugiertem Dien, sowie

D: 1 bis 20 Gew.-% eines durch Pfropfung von Styrol auf einen EPDM-Kautschuk erhaltenen Copolymerisats D.

2. Formmasse nach Anspruch 1, enthaltend als Blockcopolymerisat C ein nicht hydriertes Dreiblockcopolymerisat.

3. Formmasse nach Anspruch 1, enthaltend weitere Zusatzstoffe und Hilfsmittel E.

4. Verwendung der Formmasse nach Anspruch 1 zur Herstellung von Formteilen und Spritzguß.